# EUROPEAN PATENT SPECIFICATION

(11) **EP 2 874 104 B1**
(45) Date of publication and mention of the grant of the patent: **17.01.2018**
(21) Application number: 12880758.3
(22) Date of filing: 23.08.2012
(51) Int. Cl.: G06K 19/077, H01L 23/00

(54) **AUTOMATIC WIRE PICKUP METHOD FOR BUILT-IN ANTENNA OF DUAL-INTERFACE CARD AND DEVICE THEREOF**
AUTOMATISCHES DRAHTAUFNAHMEVERFAHREN FÜR EINGEBAUTE ANTENNE EINER DUAL-SCHNITTSTELLENKARTE UND VORRICHTUNG DAFÜR
PROCÉDÉ DE PRISE AUTOMATIQUE DE FIL POUR UNE ANTENNE INTÉGRÉE DE CARTE D'INTERFACE DOUBLE ET DISPOSITIF POUR CE PROCÉDÉ

(30) Priority: 13.07.2012 CN 201210243832
(43) Date of publication of application: 20.05.2015
(73) Proprietor: Cardmatix Co., Ltd., Dongguan, Guangdong 523710 (CN)
(72) Inventor: XIONG, Shuguang, Dongguan Guangdong 523710 (CN)
(74) Representative: Hellmich, Wolfgang
(86) International application number: PCT/CN2012/080498
(87) International publication number: WO 2014/008706

(56) References cited:
- CN-A- 101 499 428
- CN-A- 102 024 176
- CN-A- 102 063 637
- CN-A- 102 543 769
- US-A1- 2010 141 453

## Description

### TECHNICAL FIELD

The present application relates to mobile communication field, in particular relates to an automatic wire pickup method for built-in antenna of dual-interface card and device thereof.

### BACKGROUND

With the rapid development of information technology and economy all around the world, communion of economy and information technology between people becomes more and more frequently. At the same time, people have been seeking for a variety of convenient communication medias at all times, such as the early used magcard, the later used memory card and logic encryption card, as well as the contact CPU card (smart card) recently used in many fields. Now, the smart card plays an un-substitutable role in people's daily life. Either the contact smart card or the contactless smart card has their own disadvantages and advantages. The abrasion between the contact smart card and the machine tool greatly shortens the service life of the contact smart card. The use of the contactless smart card is limited when the radio frequency interference is very serious. However, it requires a relatively low power supply as the power is transferred by coupling. As many industries, such as finance industry, communications industry and so on, have owned large numbers of application techniques and infrastructures for the contact smart card, and would keep using the contact smart card, a dual-interface card integrated advantages of both the contact smart card and the contactless smart card emerges as the times require. The smart card marker is hungry for such dual-interface card.

The prior method for producing the dual-interface card is as follows. A chip slot is milled on the dual-interface card with a built-in antenna. The built-in antenna comes out form the chip slot. The antenna end of the built-in antenna is picked up manually. The CPU module connected with a built-out wire is placed inside the chip slot. The built-out wire and the antenna end are wire jointed for producing the dual-interface card. It is easy to see that the manual pickup of the antenna end in prior art results in problems such as low yield, a large west of material and low production efficiency and so on.

The prior art also provides an automatic wire pickup method for built-in antenna via a wire pickup clamp. In which, the card is placed under the wire pickup clamp. The wire pickup clamp is opened slightly and moving downward to pierce into the card portion beside the antenna end. Then the wire pickup clamp is closed to picking the antenna end up. However, such method still has following disadvantages. The card can be pierced through or the antenna inside the card can be damaged frequently as the piercing depth of the wire pickup clamp in the card is hard to control, thus resulting in problems such as low yield, a large west of material and low production efficiency and so on.

US 2010/0141453 A1 discloses a method and an apparatus provided for making radio frequency inlays which include an integrated circuit and an antenna affixed to a substrate material carrying the integrated circuit. During processing, portions of the wire forming the antenna are located adjacent to, but not directly over the integrated circuit. In the subsequent processing step, the wire ends are placed in contact with and secured to the integrated circuit terminal areas.

CN 102543769 A discloses a production method of a dual interface card and a device thereof. The production method of the dual interface card includes the following steps: printing solder paste on contacts of a dual interface chip which should be welded through the screen printing technology and placing the chip back to a furnace for heating; bonding hot melt adhesive to the position set on the dual interface chip; providing a card provided with a chip empty avoiding groove and internally provided with a coil which stretches out of a coil welding section from the inner wall of the chip empty avoiding groove and arranging the coil welding section to be in upward protruding arc shape; horizontally placing the dual interface chip above the chip empty avoiding groove and welding the welding section to the contacts of the dual interface chip; retreating the coil welding section into the chip empty avoiding groove and directly pressing the dual interface chip into the chip empty avoiding groove; and heating the hot melt adhesive.

### SUMMARY

The object of the present application is to provide an automatic wire pickup method and device for built-in antenna of dual-interface card, thus to overcome the disadvantages of low yield, a large west of material and low production efficiency in the wire pickup method of the prior art.

This object is achieved by the subject matters of the independent claims.

Preferred embodiments of the invention are the subject matters of the dependent claims.

By using the automatic wire pickup method for built-in antenna of dual-interface card and device thereof according to the present application, the following benefits can be obtained. An optical scanner scans the antenna end of the built-in antenna in the chip slot for obtaining its location, and then the wire pickup mechanism implements corresponding actions according to the scanning results for completing the wire pickup operation automatically, thus improving production efficiency. Meanwhile, the wire pickup clamp has a heating function, so the wire pickup clamp can be heated before wire pickup operation. The wire pickup clamp can melt the card portion beside the antenna end for separating the antenna end from the card, and then clamp and lift the antenna end so that the antenna end can stand on the card. In this way, the yield is increased, the west of material is reduced and the production efficiency is improved.

### BRIEF DESCRIPTION OF THE DRAWINGS

Hereinafter, embodiments of present invention will be described in detail with reference to the accompanying drawings, wherein:
Fig.1 is a structure diagram of the automatic wire pickup device for built-in antenna of a dual-interface card according to present application;
Fig.2 is a partial enlarged drawing of part A in Fig.1;
Fig.3 is a partial enlarged drawing of part B in Fig.1.

### DETAILED DESCRIPTION OF THE PREFERRED EMBODIMENT

These technical features, objects and effects of present application will be better understood from the following description and drawings. It should be understood that, the specific embodiments described here is only used for interpreting rather than defining present application.

The automatic wire pickup method for built-in antenna of a dual-interface card and device thereof according to present application adapts for picking up an antenna end of the built-in antenna from a card with a milled chip slot from which the built-in antenna comes out. Of course, a milling device can be provided for milling the chip slot on the blank card without departing from the scope of present application, such that the built-in antenna comes out from the chip slot, then the automatic wire pickup method or device of present application is used for implementing the wire pickup operation automatically. The blank card or card can be made of PVC (Polyvinyl Chloride) material with built-in antenna. Each card comprises two antenna ends substantially parallel to each other.

The automatic wire pickup method for built-in antenna of a dual-interface card comprises following steps.

S1, a card is placed on a delivery mechanism so that the antenna end of the card is substantially perpendicular to an open-close direction of a wire pickup clamp. Technical term "substantially perpendicular" means the angel between the antenna end and the open-close direction of the wire pickup clamp is 85-95° and preferably is 90°. In such a way, no friction is resulted in between the antenna and the card when lifting the antenna end, thus the antenna would not be damaged. Specifically, the antenna end is parallel to the width direction of the card in present embodiment. The width direction of the card is substantially perpendicular to an open-close direction of a wire pickup clamp, so as to facilitate the pickup of the antenna end by the wire pickup clamp.

S2, the OCR scanning group is used for scanning the antenna end so as to form location data of the antenna end when the card has been delivered to the OCR position by the delivery mechanism and positioned therein, wherein the location data is stored in a main control system.

S3, a preheated wire pickup clamp performs an automatic wire pickup operation when the card has been delivered to the wire pickup position by the delivery mechanism. The wire pickup clamp is controlled to move to a position right above the antenna end by the main control system according to the location data. The wire pickup clamp is opened and moved downward against the card portion beside the antenna end. The preheated wire pickup clamp melts the card portion beside the antenna end so that the antenna end is separated from the card, and then the wire pickup clamp clamps and lifts the antenna end so that the antenna end stands on the card. Wherein, the preheated wire pickup clamp has a temperature higher than a vitrification temperature of the card material. The heating of the wire pickup clamp comprises one of thermocouple heating, water heating, oil heating, electromagnetism heating or ultrasonic heating. The present application prefers the ultrasonic heating. In other embodiments of present application, other heating manners can be employed. In present application, the card has a main material of PVC. Of course, the card can still comprise other materials such as additives and so on. The card has an actual vitrification temperature of 80°C. Correspondingly, the heated wire pickup clamp has a temperature higher than 80°C, such as 100°C, 200°C, 250°C and so on. In the other embodiment, the card still can be other materials, such as PET (Polyethylene terephthalate). Correspondingly, the heated wire pickup clamp has a temperature higher than the vitrification temperature of the PET, such as 250 °C and so on. To sum up, the temperature of the heated wire pickup clamp can be adjusted depending on how to separate the antenna end from the card easily. For example, the heated wire pickup clamp can have a temperature higher than the vitrification temperature of the card material, or higher than the melting temperature of the card material. When melting the card, the heated wire pickup clamp pierces in a depth no larger than the depth of the antenna inserting in the card, so that the card would not be pierced through and the antenna inside the card or the card itself would not be damaged. Preferably, the depth of the wire pickup clamp piercing in the card is equal to the depth of the antenna inserting in the card.

In present embodiment, only one wire pickup clamp is arranged, which means the wire pickup clamp performs S3 once to pick up the first antenna end and then performs S3 again to pick up the second antenna end. Certainly, in order to improve wire pickup efficiency, two wire pickup clamps are preferably arranged to perform following step.

The wire pickup position comprises a first wire pickup position and a second wire pickup position. S3 further comprises a preheated first wire pickup clamp performs an automatic wire pickup operation when the card has been delivered to the first wire pickup position by the delivery mechanism. The first wire pickup clamp is controlled to move to a position right above the first antenna end by the main control system according to the location data of the first antenna end. The first wire pickup clamp is opened and moved downward against the card portion beside the first antenna end. The preheated first wire pickup clamp melts the card portion beside the first antenna end so that the first antenna end is separated from the card, and then the first wire pickup clamp clamps and lifts the first antenna end so that the first antenna end stands on the card.

Then a preheated second wire pickup clamp performs an automatic wire pickup operation when the card has been delivered to the second wire pickup position by the delivery mechanism. The second wire pickup clamp is controlled to move to a position right above the second antenna end by the main control system according to the location data of the second antenna end. The second wire pickup clamp is opened and moved downward against the card portion beside the second antenna end. The preheated second wire pickup clamp melts the card portion beside the second antenna end so that the second antenna end is separated from the card, and then the second wire pickup clamp clamps and lifts the second antenna end so that the second antenna end stands on the card.

Referring above operations, the scanning step with the OCR is as follows.

In S2, the OCR scans the antenna end so as to form location data of the antenna end when the card has been delivered to the OCR position by the delivery mechanism and positioned therein, wherein the location data is stored in a main control system. The OCR scans the positions of the first antenna end and the second antenna end synchronously.

In order to improve the accuracy of the chip for jointing the antenna end after the wire pickup, the automatic wire pickup method further comprises following step between S1 and S2 that a redundant portion of the antenna end is cut off such that the two antenna ends have two flush terminals when the card has been delivered to a cutting position.

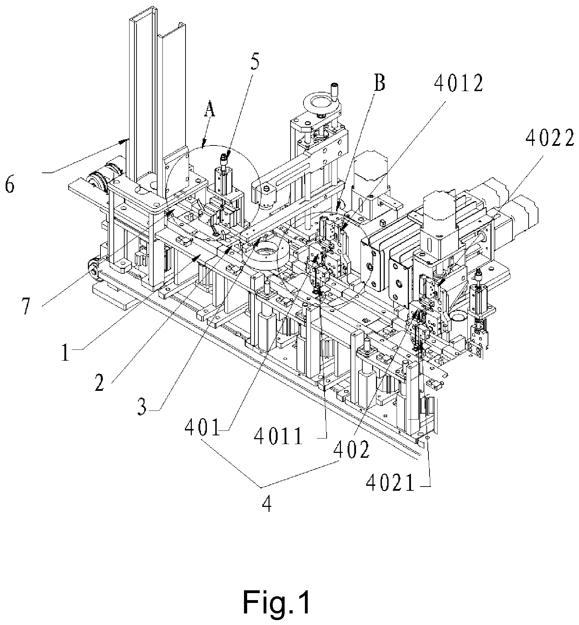

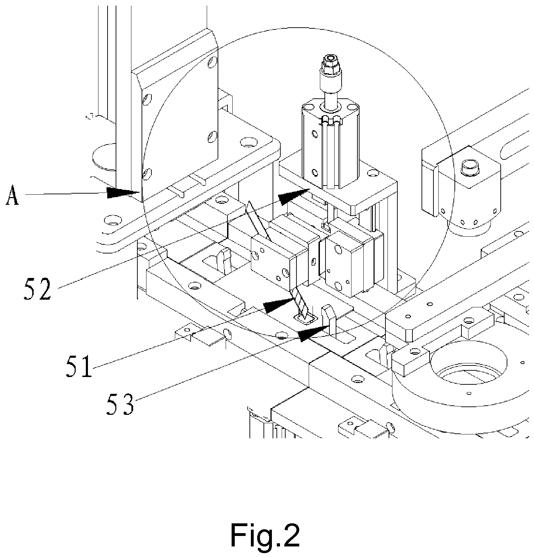

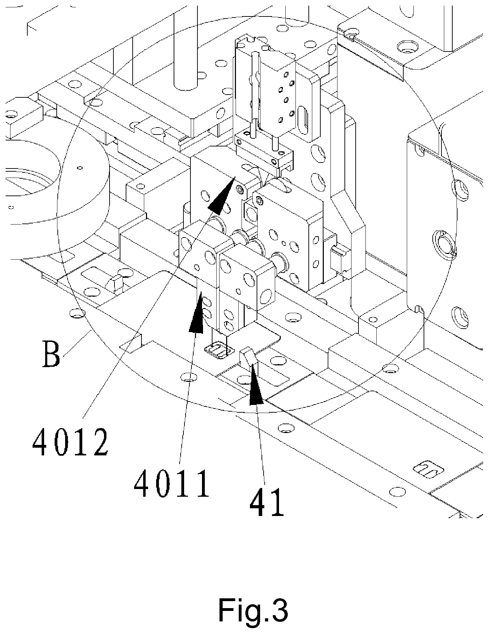

As shown in Fig.1-3, corresponding to the above wire pickup method, the automatic wire pickup device for built-in antenna of a dual-interface card in present application comprises a frame 1, a main control system mounted on the frame 1, a delivery mechanism 2, an OCR scanning group 3 and a wire pickup mechanism 4 which are mounted on the frame 1 and connected to the main control system respectively.

The delivery mechanism 2 is used for delivering the card.

The OCR scanning group 3 is used for scanning the antenna end so as to form location data of the antenna end when the card has been delivered to a position under the OCR scanning group 3 and positioned therein, wherein the location data is stored in a main control system.

The wire pickup mechanism 4 comprises wire pickup clamps 4011, 4021 and three-dimensional moving platforms 4012, 4022 driving the wire pickup clamps 4011, 4021 to move in three-dimensional directions. The wire pickup clamps 4011, 4021 are connected with a heating device for heating the wire pickup clamps 4011, 4021 to a temperature higher than a vitrification temperature of the card material.

The delivery mechanism 2 delivers the card from the OCR scanning group 3 to a position under the wire pickup mechanism 4. The main control system controls the three-dimensional moving platforms 4012, 4022 to move according to the position data, such that the wire pickup clamps 4011, 4021 are controlled to move to a position right above the antenna end. The wire pickup clamps 4011, 4021 are opened and moved downward against the card portion beside the antenna end. The heated wire pickup clamps 4011, 4021 melt the card portions beside the antenna ends so that the antenna ends are separated from the card, and then the wire pickup clamps 4011, 4021 clamp and lift the antenna ends so that the antenna ends stand on the card.

OCR (Optical Character Recognition) means detecting printed characters on paper by an electrical device. The electrical device translates the shapes of printed characters which are determined by its light or dark mode into machine-encoded text. Accordingly, OCR is a mechanical or electronic conversion of images of typewritten or printed text into machine-encoded text. In present application, the OCR is used to scan the location data of the antenna ends on the card and store the location data in the main control system.

Regarding wire pickup mechanism 4, as discussed in the method, only one wire pickup mechanism 4 is arranged which picks up one antenna end every time and picks up the two antenna ends by two times. In order to improve work efficiency, two wire pickup mechanisms 4 are preferably arranged. The two wire pickup mechanisms are the same and described as follows.

The automatic wire pickup device for built-in antenna of a dual-interface card comprises a first wire pickup mechanism 401 and a second wire pickup mechanism 402. The first wire pickup mechanism 401 is used for wire pickup of the first antenna end so that the first antenna end stands on the card and the second wire pickup mechanism 402 is used for wire pickup of the second antenna end so that the second antenna end stands on the card.

The first wire pickup mechanism 401 comprises a first wire pickup clamp 4011 and a first three-dimensional moving platform 4012 driving the first wire pickup clamp 4011 to move in three-dimensional directions. The first wire pickup clamp 4011 is connected with a first heating device for heating the first wire pickup clamp 4011 to a temperature higher than a vitrification temperature of the card material.

The second wire pickup mechanism 402 comprises a second wire pickup clamp 4021 and a second three-dimensional moving platform 4022 driving the second wire pickup clamp 4021 to move in three-dimensional directions. The second wire pickup clamp 4021 is connected with a second heating device for heating the second wire pickup clamp 4021 to a temperature higher than a vitrification temperature of the card material.

In order to improve the wire pickup accuracy, the wire pickup mechanism further comprises a wire pickup positioning block 41 for positioning the card. Both the first wire pickup clamp 4011 and the second wire pickup clamp 4021 are provided with the wire pickup positioning block 41. When the card is delivered to a position under the first wire pickup clamp 4011 and the second wire pickup clamp 4021, it stops. The wire pickup positioning block 41 blocks the card and then the first wire pickup clamp 4011 or the second wire pickup clamp 4021 performs the wire pickup operation. When the wire pickup operation is finished, the wire pickup positioning block 41 moves downward to loose the card. Then the card is delivered to the next process position by the delivery mechanism 2.

The automatic wire pickup device for built-in antenna of a dual-interface card further comprises a wire cutting mechanism 5 mounted on the frame 1 for cutting off a redundant portion of the antenna end such the two antenna ends have two flush terminals before the card has been delivered to the OCR scanning group 3. The wire cutting mechanism 5 comprises a cutting blade 51, a three-dimensional driving platform 52 driving the cutting blade 51 to move in three-dimensional directions and a wire cutting positioning block 53 for positioning the card.

The automatic wire pickup device for built-in antenna of a dual-interface card comprises a material bearing box 6 mounted on the frame 1 for placing the cards to be processed and a card taking mechanism 7 mounted under the frame 1 for taking the cards inside the material bearing box 6 and then putting them on the delivery mechanism 2.

While the present invention has been described with reference to certain embodiments, it will be understood by those skilled in the art that various changes may be made without departing from the scope of the present invention. In addition, many modifications may be made to adapt a particular situation or material to the teachings of the present invention without departing from its scope.

## Claims

1. An automatic wire pickup method for a built-in antenna of a dual-interface card for picking up an antenna end of the built-in antenna from a card with a milled chip slot, wherein the built-in antenna comes out from the milled chip slot, the method comprising:
S1, placing the card on a delivery mechanism (2) so that the antenna end of the card is substantially perpendicular to an open-close direction of a wire pickup clamp (4011,4021); S2, scanning the antenna end with an optical scanner so as to form location data of the antenna end when the card has been delivered to the optical scanner position and positioned therein, wherein the location data is stored in a main control system;
S3, controlling a preheated wire pickup clamp to perform an automatic wire pickup operation when the card has been delivered to a wire pickup position, wherein the wire pickup clamp is controlled to move to a position right above the antenna end by the main control system according to the location data, wherein, the wire pickup clamp is opened and moved downward against a card portion beside the antenna end, the wire pickup clamp melts the card portion beside the antenna end so that the antenna end is separated from the card, and then the wire pickup clamp clamps and lifts the antenna end so that the antenna end stands on the card.

2. The automatic wire pickup method for a built-in antenna of a dual-interface card according to claim 1, wherein two antenna ends substantially parallel to each other are provided, and the automatic wire pickup method further comprises the following step between steps S1 and S2 that a redundant portion of the antenna end is cut off such that the two antenna ends have two flush terminals when the card has been delivered to a cutting position.

3. The automatic wire pickup method for a built-in antenna of a dual-interface card according to claim 1, wherein two antenna ends are provided on each card and step S2 further comprises scanning the antenna ends with the optical scanner to obtain the location data of the antenna ends in the card when the cards have been delivered to the optical scanner position by the delivery mechanism (2) and positioned therein, wherein the location data is stored in the main control system.

4. The automatic wire pickup method for a built-in antenna of a dual-interface card according to claim 3, wherein the wire pickup position comprises a first wire pickup position and a second wire pickup position, and step S3 further comprises controlling a preheated first wire pickup clamp (4011) to perform an automatic wire pickup operation when the card has been delivered to the first wire pickup position, wherein the first wire pickup clamp is controlled to move to a position right above a first antenna end by the main control system according to location data of the first antenna end, the first wire pickup clamp is opened and moved downward against a card portion beside the first antenna end, the preheated first wire pickup clamp melts the card portion beside the first antenna end so that the first antenna end is separated from the card, and then the first wire pickup clamp clamps and lifts the first antenna end so that the first antenna end stands on the card;
then controlling a preheated second wire pickup clamp (4021) to perform an automatic wire pickup operation when the card has been delivered to the second wire pickup position, wherein the second wire pickup clamp is controlled to move to a position right above a second antenna end by the main control system according to location data of the second antenna end, the second wire pickup clamp is opened and moved downward against a card portion beside the second antenna end, the preheated second wire pickup clamp melts the card portion beside the second antenna end so that the second antenna end is separated from the card, and then the second wire pickup clamp clamps and lifts the second antenna end so that the second antenna end stands on the card.

5. The automatic wire pickup method for a built-in antenna of a dual-interface card according to claim 1 or 4, wherein the wire pickup clamp is preheated by one of thermocouple heating, water heating, oil heating, electromagnetism heating or ultrasonic heating.

6. An automatic wire pickup device for a built-in antenna of a dual-interface card for picking up an antenna end of the built-in antenna from a card with a milled chip slot, wherein the built-in antenna comes out from the milled chip slot, the automatic wire pickup device comprising a frame (1), a main control system mounted on the frame (1), a delivery mechanism (2), an optical scanning group (3) and a wire pickup mechanism (4), the delivery mechanism (2), the optical scanning group (3) and the wire pickup mechanism (4) being mounted on the frame (1) and connected to the main control system; wherein the delivery mechanism (2) is used for delivering the card;
the optical scanning group (3) is used for scanning the antenna end so as to form location data of the antenna end when the card has been delivered to a position under the optical scanning group (3) and positioned therein, wherein the location data is stored in a main control system;
the wire pickup mechanism (4) comprises a wire pickup clamp (4011, 4021) and a three-dimensional moving platform (4012, 4022) driving the wire pickup clamp (4011, 4021) to move in three-dimensional directions, the wire pickup clamp (4011, 4021) being connected with a heating device for heating the wire pickup clamp, wherein in operation the delivery mechanism (2) delivers the card from the optical scanning group (3) to a position under the wire pickup mechanism (4), the main control system controls the three-dimensional moving platform (4012, 4022) to move according to the location data, such that the wire pickup clamp (4011, 4021) is controlled to move to a position right above the antenna end, the wire pickup clamp (4011, 4021) is opened and moved downward against a card portion beside the antenna end, and the heated wire pickup clamp (4011, 4021) melts a card portion beside the antenna end so that the antenna end is separated from the card, and then the wire pickup clamp (4011, 4021) clamps and lifts the antenna end so that the antenna end stands on the card.

7. The automatic wire pickup device for a built-in antenna of a dual-interface card according to claim 6, wherein the automatic wire pickup device for a built-in antenna of a dual-interface card further comprises a wire cutting mechanism (5) mounted on the frame (1) for cutting off a redundant portion of the antenna end such the two antenna ends have two flush terminals before the card has been delivered to the optical scanning group (3), wherein the wire cutting mechanism (5) comprises a cutting blade (51), a three-dimensional driving platform (52) driving the cutting blade (51) to move in three-dimensional directions and a wire cutting positioning block (53) for positioning the card.

8. The automatic wire pickup device for a built-in antenna of a dual-interface card according to claim 6, wherein the automatic wire pickup device for a built-in antenna of a dual-interface card further comprises a first wire pickup mechanism (401) and a second wire pickup mechanism (402), wherein the first wire pickup mechanism (401) is used for wire pickup of a first antenna end so that a first antenna end stands on the card and the second wire pickup mechanism (402) is used for wire pickup of a second antenna end so that a second antenna end stands on the card; wherein the first wire pickup mechanism (401) comprises a first wire pickup clamp (4011) and a first three-dimensional moving platform (4012) driving the first wire pickup clamp (4011) to move in three-dimensional directions, the first wire pickup clamp (4011) being connected with a first heating device for heating the first wire pickup clamp (4011); the second wire pickup mechanism (402) comprises a second wire pickup clamp (4021) and a second three-dimensional moving platform (4022) driving the second wire pickup clamp (4021) to move in three-dimensional directions, the second wire pickup clamp (4021) being connected with a second heating device for heating the second wire pickup clamp (4021).

9. The automatic wire pickup device for a built-in antenna of a dual-interface card according to claim 6, wherein the wire pickup mechanism (4) further comprises a wire pickup positioning block (41) for positioning the card.

10. The automatic wire pickup device for a built-in antenna of a dual-interface card according to claim 6, further comprising a material bearing box (6) mounted on the frame (1) for placing the cards to be processed and a card taking mechanism (7) mounted under the frame (1) for taking the cards inside the material bearing box (6) and then putting them on the delivery mechanism (2).

## Patentansprüche

1. Ein automatisches Drahtaufnahmeverfahren für eine eingebaute Antenne einer Dual-Schnittstellenkarte zum Aufnehmen eines Antennenendes der eingebauten Antenne von einer Karte mit einer gefrästen Chipvertiefung, wobei die eingebaute Antenne aus der gefrästen Chipvertiefung heraustritt, wobei das Verfahren folgendes umfasst:
S1, Platzieren der Karte auf einem Übergabemechanismus (2), so dass das Antennenende der Karte im Wesentlichen senkrecht zu einer Auf - Zu - Richtung einer Drahtaufnahmeklammer (4011, 4021) steht;
S2, Abtasten des Antennenendes mit einem optischen Scanner, um so Ortsdaten des Antennenendes zu bilden, wenn die Karte zur optischen Scannerstelle übergeben wurde und dort positioniert wurde, wobei die Ortsdaten in einem Hauptsteuersystem gespeichert werden;
S3, Steuern einer vorgeheizten Drahtaufnahmeklammer, einen automatischen Drahtaufnahmevorgang auszuführen, wenn die Karte zu einer Drahtaufnahmeposition übergeben wurde, wobei die Drahtaufnahmeklammer durch das Hauptsteuersystem gesteuert wird, sich in eine Position genau über dem Antennenende gemäß der Ortsdaten zu bewegen, wobei die Drahtaufnahmeklammer geöffnet wird und nach unten gegen ein Kartenteil neben dem Antennenende bewegt wird, wobei die Drahtaufnahmeklammer den Kartenteil neben dem Antennenende schmilzt, so dass das Antennenende von der Karte getrennt wird und anschließend die Drahtaufnahmeklammer das Antennenende einklemmt und anhebt, so dass das Antennenende auf der Karte steht.

2. Das automatische Drahtaufnahmeverfahren für eine eingebaute Antenne einer Dual-Schnittstellenkarte gemäß Anspruch 1, wobei zwei im Wesentlichen zueinander parallele Antennenenden vorgesehen sind und das automatische Drahtaufnahmeverfahren ferner den folgenden Schritt zwischen Schritten S1 und S2 umfasst, dass ein überflüssiger Abschnitt des Antennenendes abgeschnitten wird, so dass die beiden Antennenenden zwei bündige Anschlüsse haben, wenn die Karte zu einer Schneideposition übergeben wurde.

3. Das automatische Drahtaufnahmeverfahren für eingebaute Antenne einer Dual-Schnittstellenkarte gemäß Anspruch 1, wobei zwei Antennenenden auf jeder Karte vorgesehen sind und Schritt S2 ferner das Abtasten der Antennenenden mit dem optischen Scanner umfasst, um die Ortsdaten der Antennenenden in der Karte zu erhalten, wenn die Karten zur optischen Scannerstelle durch den Übergabemechanismus (2) übergeben wurden und darin positioniert wurden, wobei die Ortsdaten in dem Hauptsteuersystem gespeichert werden.

4. Das automatische Drahtaufnahmeverfahren für eine eingebaute Antenne einer Dual-Schnittstellenkarte gemäß Anspruch 3, wobei die Drahtaufnahmeposition eine erste Drahtaufnahmeposition und eine zweite Drahtaufnahmeposition umfasst und Schritt S3 ferner das Steuern einer vorgeheizten ersten Drahtaufnahmeklammer (4011) umfasst, um einen automatischen Drahtaufnahmevorgang auszuführen, wenn die Karte zu der ersten Drahtaufnahmeposition übergeben wurde, wobei die erste Drahtaufnahmeklammer gesteuert wird, sich in eine Position genau über dem Antennenende durch das Hauptsteuersystem gemäß der Ortsdaten des ersten Antennenendes zu bewegen, wobei die erste Drahtaufnahmeklammer geöffnet wird und nach unten gegen einen Kartenteil neben dem Antennenende bewegt wird, wobei die vorgeheizte erste Drahtaufnahmeklammer den Kartenteil neben dem Antennenende schmilzt, so dass das Antennenende von der Karte getrennt wird und anschließend die erste Drahtaufnahmeklammer das Antennenende einklemmt und anhebt, so dass das Antennenende auf der Karte steht;
dann Steuern einer vorgeheizten zweiten Drahtaufnahmeklammer (4021), um einen automatischen Drahtaufnahmevorgang auszuführen, wenn die Karte zur zweiten Drahtaufnahmeposition übergeben wurde, wobei die zweite Drahtaufnahmeklammer gesteuert wird, um sich in eine Position genau über einem zweiten Antennenende durch das Hauptsteuersystem gemäß der Ortsdaten zu bewegen, wobei die zweite Drahtaufnahmeklammer geöffnet wird und nach unten gegen einen Kartenteil neben dem zweiten Antennenende bewegt wird, wobei die vorgeheizte zweite Drahtaufnahmeklammer den Kartenteil neben dem zweiten Antennenende schmilzt, so dass das zweite Antennenende von der Karte getrennt wird und anschließend die zweite Drahtaufnahmeklammer das zweite Antennenende einklemmt und anhebt, so dass das zweite Antennenende auf der Karte steht.

5. Das automatische Drahtaufnahmeverfahren für eine eingebaute Antenne einer Dual-Schnittstellenkarte gemäß Anspruch 1 oder 4, wobei die Drahtaufnahmeklammer durch eine Thermoelementheizung, Wasserheizung, Ölheizung, Elektromagnetismusheizung oder Ultraschallheizung vorgeheizt wird.

6. Eine automatische Drahtaufnahmevorrichtung für eine eingebaute Antenne einer Dual-Schnittstellenkarte zum Aufnehmen eines Antennenendes der eingebauten Antenne von einer Karte mit einer gefrästen Chipvertiefung, wobei das eingebaute Antennenende aus der gefrästen Chipvertiefung heraustritt, wobei die automatische Drahtaufnahmevorrichtung einen Rahmen (1), ein Hauptsteuersystem, das auf dem Rahmen (1) montiert ist, einen Übergabemechanismus (2), eine optische Scangruppe (3) und einen Drahtaufnahmemechanismus (4) umfasst, wobei der Übergabemechanismus (2), die optische Scangruppe (3) und der Drahtaufnahmemechanismus (4) auf dem Rahmen (1) montiert sind und mit dem Hauptsteuersystem verbunden sind; wobei
der Übergabemechanismus (2) verwendet wird, um die Karte zu übergeben;
die optische Scangruppe (3) verwendet wird, um das Antennenende abzutasten, um so Ortsdaten des Antennenendes zu bilden, wenn die Karte zu einer Position unter der optischen Scangruppe (3) übergeben und dort positioniert wurde, wobei die Ortsdaten in einem Hauptsteuersystem gespeichert werden;
der Drahtaufnahmemechanismus (4) eine Drahtaufnahmeklammer (4011, 4021) umfasst und eine dreidimensionale bewegliche Plattform (4012, 4022), die die Drahtaufnahmeklammer (4011, 4021) lenkt, sich in dreidimensionalen Richtungen zu bewegen, wobei die Drahtaufnahmeklammer (4011, 4021) mit einer Heizungsvorrichtung verbunden ist, um die Drahtaufnahmeklammer zu erhitzen, wobei im Betrieb der Übergabemechanismus (2) die Karte von der optischen Scangruppe (3) zu einer Position unter dem Drahtaufnahmemechanismus (4) übergibt, wobei das Hauptsteuersystem die dreidimensional bewegliche Plattform (4012, 4022) steuert, sich gemäß den Ortsdaten zu bewegen, so dass die Drahtaufnahmeklammer (4011, 4021) gesteuert wird, sich in eine Position genau über dem Antennenende zu bewegen, wobei die Drahtaufnahmeklammer (4011, 4021) geöffnet und nach unten gegen einen Kartenteil neben dem Antennenende bewegt wird, und die erhitzte Drahtaufnahmeklammer (4011, 4021) einen Kartenteil neben der Antenne schmilzt, so dass das Antennenende von der Karte getrennt wird und dann die Drahtaufnahmeklammer (4011, 4021) das Antennenende einklemmt und anhebt, so dass das Antennenende auf der Karte steht.

7. Die automatische Drahtaufnahmevorrichtung für eine eingebaute Antenne einer Dual-Schnittstellenkarte gemäß Anspruch 6, wobei die automatische Drahtaufnahmevorrichtung für eine eingebaute Antenne einer Dual-Schnittstellenkarte ferner einen Drahtschneidemechanismus (5) umfasst, der auf dem Rahmen (1) montiert ist, um einen überflüssigen Abschnitt des Antennenendes abzuschneiden, so dass die beiden Antennenenden zwei bündige Anschlüsse haben, bevor die Karte zur optischen Scangruppe (3) übergeben wurde, wobei der Drahtschneidemechanismus (5) eine Schneideklinge (51), eine dreidimensionale Antriebsplattform (52), die die Schneideklinge (51) lenkt, sich in dreidimensionalen Richtungen zu bewegen, und einen Drahtschneidepositionierblock (53) zum Positionieren der Karte umfasst.

8. Die automatische Drahtaufnahmevorrichtung für eine eingebaute Antenne einer Dual-Schnittstellenkarte gemäß Anspruch 6, wobei die automatische Drahtaufnahmevorrichtung für eine eingebaute Antenne einer Dual-Schnittstellenkarte ferner einen ersten Drahtaufnahmemechanismus (401) und einen zweiten Drahtaufnahmemechanismus (402) umfasst, wobei der erste Drahtaufnahmemechanismus (401) zur Drahtaufnahme eines ersten Antennenendes verwendet wird, so dass ein erstes Antennenende auf der Karte steht und der zweite Drahtaufnahmemechanismus (402) zur Drahtaufnahme eines zweiten Antennenendes verwendet wird, so dass ein zweites Antennenende auf der Karte steht; wobei der erste Drahtaufnahmemechanismus (402) eine erste Drahtaufnahmeklammer (4011) und eine erste dreidimensional bewegliche Plattform (4012) umfasst, die die erste Drahtaufnahmeklammer (4011) lenkt, sich in dreidimensionalen Richtungen zu bewegen, wobei die erste Drahtaufnahmeklammer (4011) mit einer ersten Heizvorrichtung zum Erhitzen der ersten Drahtaufnahmeklammer (4011) verbunden ist; wobei der zweite Drahtaufnahmemechanismus (402) eine zweite Drahtaufnahmeklammer (4021) und eine zweite dreidimensional bewegliche Plattform (4022) umfasst, die die zweite Drahtaufnahmeklammer (4021) lenkt, sich in dreidimensionalen Richtungen zu bewegen, wobei die zweite Drahtaufnahmeklammer (4021) mit der zweiten Heizvorrichtung zum Erhitzen der zweiten Drahtaufnahmeklammer (4021) verbunden ist.

9. Die automatische Drahtaufnahmevorrichtung für eine eingebaute Antenne einer Dual-Schnittstellenkarte gemäß Anspruch 6, wobei der Drahtaufnahmemechanismus (4) ferner einen Drahtaufnahmepositionierblock (41) zum Positionieren der Karte umfasst.

10. Die automatische Drahtaufnahmevorrichtung für eine eingebaute Antenne einer Dual-Schnittstellenkarte gemäß Anspruch 6, ferner mit einem Materiallagerbehältnis (6) das auf dem Rahmen (1) befestigt ist, um zu verarbeitende Karten unterzubringen und einem Kartenentnahmemechanismus (7), der unter dem Rahmen (1) montiert ist, um die Karten in das Innere des Materiallagerbehältnisses (6) zu bringen und sie anschließend auf den Übergabemechanismus (2) zu legen.

## Revendications

1. Procédé de prise automatique de fil pour une antenne intégrée de carte d'interface double pour prendre une extrémité d'antenne de l'antenne intégrée à partir d'une carte avec une fente de puce fraisée, l'antenne intégrée sortant de la fente de puce fraisée, le procédé comprenant :
S1 : placement de la carte sur un mécanisme de distribution (2) de sorte que l'extrémité d'antenne de la carte soit sensiblement perpendiculaire à une direction d'ouverture-fermeture d'une pince de prise de fil (4011, 4021) ;
S2 : balayage de l'extrémité d'antenne avec un scanner optique de façon à former des données d'emplacement de l'extrémité d'antenne lorsque la carte a été amenée dans la position de scanner optique et est positionnée à l'intérieur, les données d'emplacement étant mémorisées dans un système de commande principal ;
S3 : commande d'une pince de prise de fil préchauffée pour effectuer une opération de prise automatique de fil lorsque la carte a été amenée dans une position de prise de fil, la pince de prise de fil étant commandée pour se déplacer dans une position juste au-dessus de l'extrémité d'antenne grâce au système de commande principal en fonction des données d'emplacement, la pince de prise de fil étant ouverte et déplacée vers le bas contre une partie de carte à côté de l'extrémité d'antenne, la pince de prise de fil faisant fondre la partie de carte à côté de l'extrémité d'antenne de sorte que l'extrémité d'antenne soit séparée de la carte, puis la pince de prise de fil serrant et soulevant l'extrémité d'antenne de sorte que l'extrémité d'antenne se tienne droite sur la carte.

2. Procédé de prise automatique de fil pour une antenne intégrée de carte d'interface double selon la revendication 1, dans lequel deux extrémités d'antenne sensiblement parallèles l'une par rapport à l'autre sont prévues, et le procédé de prise automatique de fil comprenant en outre l'étape suivante entre les étapes S1 et S2 selon laquelle une partie redondante de l'extrémité d'antenne est coupée de telle sorte que les deux extrémités d'antenne aient deux terminaux affleurants lorsque la carte a été amenée dans une position de coupe.

3. Procédé de prise automatique de fil pour une antenne intégrée de carte d'interface double selon la revendication 1, dans lequel deux extrémités d'antenne sont prévues sur chaque carte et dans lequel l'étape S2 comprend en outre le balayage des extrémités d'antenne avec le scanner optique pour obtenir les données d'emplacement des extrémités d'antenne dans la carte lorsque les cartes ont été amenées dans la position de scanner optique par le mécanisme de distribution (2) et positionnées à l'intérieur, dans lequel les données d'emplacement sont mémorisées dans le système de commande principal.

4. Procédé de prise automatique de fil pour une antenne intégrée de carte d'interface double selon la revendication 3, dans lequel la position de prise de fil comprend une première position de prise de fil et une seconde position de prise de fil et dans lequel l'étape S3 comprend en outre la commande d'une première pince de prise de fil (4011) préchauffée pour effectuer une opération de prise automatique de fil lorsque la carte a été amenée dans la première position de prise de fil, dans lequel la première pince de prise de fil est commandée pour se déplacer dans une position juste au-dessus d'une première extrémité d'antenne grâce au système de commande principal en fonction des données d'emplacement de la première extrémité d'antenne, la première pince de prise de fil est ouverte et déplacée vers le bas contre une partie de carte à côté de la première extrémité d'antenne, la première pince de prise de fil préchauffée fait fondre la partie de carte à côté de la première extrémité d'antenne de sorte que la première extrémité d'antenne soit séparée de la carte puis que la première pince de prise de fil serre et soulève la première extrémité d'antenne de sorte que la première extrémité d'antenne se tienne droite sur la carte ;
puis la commande d'une seconde pince de prise de fil (4021) préchauffée pour effectuer une opération de prise automatique de fil lorsque la carte a été amenée dans la seconde position de prise de fil, la seconde pince de prise de fil étant commandée pour se déplacer dans une position juste au-dessus d'une seconde extrémité d'antenne grâce au système de commande principal en fonction des données d'emplacement de la seconde extrémité d'antenne, la seconde pince de prise de fil étant ouverte et déplacée vers le bas contre une partie de carte à côté de la seconde extrémité d'antenne, la seconde pince de prise de fil préchauffée faisant fondre la partie de carte à côté de la seconde extrémité d'antenne de sorte que la seconde extrémité d'antenne soit séparée de la carte puis la seconde pince de prise de fil serrant et soulevant la seconde extrémité d'antenne de sorte que la seconde extrémité d'antenne se tienne droite sur la carte.

5. Procédé de prise automatique de fil pour une antenne intégrée de carte d'interface double selon la revendication 1 ou 4, dans lequel la pince de prise de fil est préchauffée par un élément parmi un chauffage à thermocouple, un chauffage à l'eau, un chauffage à l'huile, un chauffage électromagnétique ou un chauffage ultrasonique.

6. Dispositif de prise automatique de fil pour une antenne intégrée de carte d'interface double pour prendre une extrémité d'antenne de l'antenne intégrée à partir d'une carte avec une fente de puce fraisée, dans lequel l'antenne intégrée sort de la fente de puce fraisée, le dispositif de prise automatique de fil comprenant un cadre (1), un système de commande principal fixé sur le cadre (1), un mécanisme de distribution (2), un groupe de balayage optique (3) et un mécanisme de prise de fil (4), le mécanisme de distribution (2), le groupe de balayage optique (3) et le mécanisme de prise de fil (4) étant fixés sur le cadre (1) et étant reliés au système de commande principal ;
dans lequel le mécanisme de distribution (2) est utilisé pour amener la carte ;
le groupe de balayage optique (3) est utilisé pour balayer l'extrémité d'antenne de façon à former les données d'emplacement de l'extrémité d'antenne lorsque la carte a été amenée dans une position sous le groupe de balayage optique (3) et positionnée à l'intérieur, dans lequel les données d'emplacement sont mémorisées dans un système de commande principal ;
le mécanisme de prise de fil (4) comprend une pince de prise de fil (4011, 4021) et une plateforme mobile tridimensionnelle (4012, 4022) entraînant la pince de prise de fil (4011, 4021) pour la déplacer dans des directions tridimensionnelles, la pince de prise de fil (4011, 4021) étant reliée à un dispositif de chauffage pour chauffer la pince de prise de fil, dans lequel en fonctionnement, le mécanisme de distribution (2) amène la carte du groupe de balayage optique (3) dans une position située sous le mécanisme de prise de fil (4), le système de commande principal commande la plateforme mobile tridimensionnelle (4012, 4022) pour la déplacer en fonction des données d'emplacement, de telle sorte que la pince de prise de fil (4011, 4021) soit commandée pour se déplacer dans une position juste au-dessus de l'extrémité d'antenne, la pince de prise de fil (4011, 4021) étant ouverte et déplacée vers le bas contre une partie de carte à côté de l'extrémité d'antenne et la pince de prise de fil (4011, 4021) chauffée faisant fondre une partie de carte à côté de l'extrémité d'antenne de sorte que l'extrémité d'antenne soit séparée de la carte puis que la pince de prise de fil (4011, 4021) serre et soulève l'extrémité d'antenne de sorte que l'extrémité d'antenne se tienne droite sur la carte.

7. Dispositif de prise automatique de fil pour une antenne intégrée de carte d'interface double selon la revendication 6, dans lequel le dispositif de prise automatique de fil pour une antenne intégrée de carte d'interface double comprend en outre un mécanisme de découpe de fil (5) fixé sur le cadre (1) pour couper une partie redondante de l'extrémité d'antenne de telle sorte que les deux extrémités d'antenne aient deux terminaux affleurants avant que la carte ait été amenée dans la groupe de balayage optique (3), dans lequel le mécanisme de découpe de fil (5) comprend une lame de coupe (51), une plateforme d'entraînement tridimensionnelle (52) entraînant la lame de coupe (51) pour la déplacer dans des directions tridimensionnelles et un bloc de positionnement de coupe de fil (53) pour positionner la carte.

8. Dispositif de prise automatique de fil pour une antenne intégrée de carte d'interface double selon la revendication 6, dans lequel le dispositif de prise automatique de fil pour une antenne intégrée de carte d'interface double comprend en outre un premier mécanisme de prise de fil (401) et un second mécanisme de prise de fil (402), dans lequel le premier mécanisme de prise de fil (401) est utilisé pour la prise de fil d'une première extrémité d'antenne de sorte qu'une première extrémité d'antenne se tienne droite sur la carte et le second mécanisme de prise de fil (402) est utilisé pour la prise de fil d'une seconde extrémité d'antenne de sorte qu'une seconde extrémité d'antenne se tienne droite sur la carte ; dans lequel le premier mécanisme de prise de fil (401) comprend une première pince de prise de fil (4011) et une première plateforme mobile tridimensionnelle (4012) entraînant la première pince de prise de fil (4011) pour la déplacer dans des directions tridimensionnelles, la première pince de prise de fil (4011) étant reliée à un premier dispositif de chauffage pour chauffer la première pince de prise de fil (4011) ; le second mécanisme de prise de fil (402) comprend une seconde pince de prise de fil (4021) et une seconde plateforme mobile tridimensionnelle (4022) entraînant la seconde pince de prise de fil (4021) pour la déplacer dans des directions tridimensionnelles, la seconde pince de prise de fil (4021) étant reliée à un second dispositif de chauffage pour chauffer la seconde pince de prise de fil (4021 ).

9. Dispositif de prise automatique de fil pour une antenne intégrée de carte d'interface double selon la revendication 6, dans lequel le mécanisme de prise de fil (4) comprend en outre un bloc de positionnement de prise de fil (41) pour positionner la carte.

10. Dispositif de prise automatique de fil pour une antenne intégrée de carte d'interface double selon la revendication 6, comprenant en outre une caisse de stockage de matériau (6) fixée sur le cadre (1) pour placer les cartes à traiter et un mécanisme de prise de carte (7) fixé sous le cadre (1) pour prendre les cartes à l'intérieur de la caisse de stockage de matériau (6) puis les placer sur le mécanisme de distribution (2).
